# EUROPÄISCHE PATENTANMELDUNG

(11) **EP 1 655 130 A1**
(43) Veröffentlichungstag der Anmeldung: **10.05.2006**
(21) Anmeldenummer: 04026415.2
(22) Anmeldetag: 08.11.2004
(51) Int. Cl.: B32B 27/32, B29C 55/04, B65D 65/40

(54) **Kaltverformbares Laminat**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Ein kaltverformbares Laminat für die Herstellung von Behältern zur Verpackung von pharmazeutischen, nahrungsergänzenden und medizintechnischen Produkten und Diagnostika weist eine Aluminiumfolie mit wenigstens einer auf einer ersten Seite der Aluminiumfolie angeordneten biaxial gereckten Folie aus Polyamid (oPA), Polyester oder Polypropylen (PP) und wenigstens einer auf der zweiten Seite der Aluminiumfolie angeordneten nicht gereckten Folie aus Polyvinylchlorid (PVC) als Siegelschicht auf. Die nicht gereckten Folien aus Polyvinylchlorid (PVC) weisen gegenüber derzeit verwendeten PVC-Folien eine deutlich geringere Gas- und Wasserdampfdurchlässigkeit auf und gegenüber mono- oder biaxial gereckten PVC-Folien keine Delamination nach einer Verformung.

## Beschreibung

Die Erfindung betrifft ein kaltverformbares Laminat für die Herstellung von Behältern zur Verpackung von pharmazeutischen, nahrungsergänzenden und medizintechnischen Produkten und Diagnostika, mit einer Aluminiumfolie, wenigstens einer auf einer ersten Seite der Aluminiumfolie angeordneten biaxial gereckten Folie aus Polyamid (oPA), Polyester oder Polypropylen (PP) und wenigstens einer auf der zweiten Seite der Aluminiumfolie angeordneten Folie aus Polyvinylchlorid (PVC) als Siegelschicht.

Für die Herstellung von Behältern zur Verpackung von pharmazeutischen und medizintechnischen Produkten und Diagnostika, wie z.B. Bodenteile von Blister- oder Durchdrückpackungen, sind kaltverformbare Laminate mit dem Aufbau biaxial gereckte Kunststofffolie / Aluminiumfolie / Siegelschicht (Lack, Kunststofffolie oder Kunststoffbeschichtung) bekannt. Die Verbindung der aussenseitigen Kunststofffolie mit der Aluminiumfolie erfolgt über einen Klebstoff, wobei die Aluminiumfolie überwiegend lackiert ist, um den Einfluss von Belegungen auf der Aluminiumfolie zu kompensieren. Es ist auch schon vorgeschlagen worden, die Verbindung zwischen einer aussenseitigen Folie aus biaxial gerecktem Polyamid und der Aluminiumfolie durch Heisskalandrierung herzustellen, wobei der Klebstoff bzw. das Kaschiermittel vorgängig aufgetragen und getrocknet wurde.

Aus der EP-A-1 005 977 ist ein kaltverformbares Laminat mit einer Aluminiumfolie, einer auf einer ersten Seite der Aluminiumfolie angeordneten biaxial gereckten Folie aus Polyamid und einer auf der zweiten Seite der Aluminiumfolie angeordneten, wenigstens monoaxial gereckten Folie aus Polyvinylchlorid bekannt.

Der Erfindung liegt die Aufgabe zugrunde, ein kaltverformbares Laminat der eingangs genannten Art zu schaffen, das im Vergleich zu den Laminaten nach dem Stand der Technik eine geringere Gas- und Wasserdampfdurchlässigkeit aufweist und keine Delamination der Innenseite nach einer Verformung zeigt.

Zur erfindungsgemässen Lösung der Aufgabe führt, dass die Folie/n aus Polyvinylchlorid (PVC) nicht gereckt ist/sind.

Die auf der ersten Seite der Aluminiumfolie angeordnete biaxial gereckte (orientierte) Folie aus Polyamid (oPA) kann ebenfalls mit einer nicht gereckten Folie aus Polyvinylchlorid (PVC) oder aus einem Polyolefin, z.B. Polypropylen, aus einem Polyester oder aus COC verbunden sein. Ebenso kann zwischen der auf der zweiten Seite der Aluminiumfolie angeordneten nicht gereckten Folie aus Polyvinylchlorid (PVC) und der Aluminiumfolie eine biaxial gereckte Folie aus Polyamid (oPA) angeordnet sein.

Die als Siegelschicht dienende nicht gereckte Folie aus Polyvinylchlorid (PVC) kann gegen die Aluminiumfolie oder die biaxial gereckte Folie aus Polyamid (oPA) lack- oder extrusionskaschiert sein.

Ebenso kann die auf der ersten Seite der Aluminiumfolie angeordnete biaxial gereckte Folie aus Polyamid (oPA) gegen die Aluminiumfolie bzw. die auf der ersten Seite der Aluminiumfolie angeordnete nicht gereckte Folie aus Polyvinylchlorid (PVC) gegen die biaxial gereckte Folie aus Polyamid (oPA) lack- oder extrusionskaschiert sein.

Die Dicke der auf der zweiten Seite der Aluminiumfolie als Siegelschicht angeordneten nicht gereckten Folie aus Polyvinylchlorid (PVC) beträgt bevorzugt 10 bis 30 µm.

Die Dicke einer auf der ersten Seite der Aluminiumfolie angeordneten nicht gereckten Folie aus Polyvinylchlorid (PVC) beträgt bevorzugt 10 bis 100 µm, insbesondere 10 bis 50 µm und besonders bevorzugt 10 bis 30 µm.

Die Dicke der biaxial gereckten Folie/n aus Polyamid (oPA), Polyester oder Polypropylen (PP) beträgt bevorzugt 10 bis 50 µm, insbesondere 15 bis 30 µm.

Bevorzugt sind die nachstehend angeführten Laminate aus drei, vier oder fünf Schichten:
oPA // Al // PVC (10 - 30 µm)
PVC (100 - 30 µm) / oPA // Al // PVC (10-30 µm)
PVC (10-30 µm) / oPA // Al // oPA / PVC (10-30 µm)

Geeignete Kaschiermittel für das Extrusionskaschieren der biaxial gereckten Folien aus Polyamid (oPA) und die nicht gereckten Folien aus Polyvinylchlorid (PVC) gegen die Aluminiumfolie sind haftungsmodifizierte Polyolefine, insbesondere PE-MAH (Polyethylen-Maleinsäureanhydrid-Pfropfpolymer), PP-MAH (Polypropylen-Maleinsäureanhydrid-Pfropfpolymer), EVA (Ethylen-Vinylacetat-Copolymer)-MAH oder PE-Copolymere, insbesondere EAA (EthylenAcrylsäure), EBA (Ethylen-Butylacrylat), EMA (Ethylen-Methacrylsäure), EEA (Ethylen-Ethylacrylat) oder lonomere. Die Dicke der Extrusionskaschierung liegt im Bereich von 2 bis 30 µm, vorzugsweise 3 bis 12 µm, als Monoschicht oder coextrudiert, z.B. PP-MAH/PP/PP-MAH.

Die biaxial gereckten Folien aus Polyamid (oPA) bzw. die nicht gereckten Folien aus Polyvinylchlorid (PVC) und/oder die Aluminiumfolie können mit einem Primer beschichtet sein. Geeignete Primer sind wasser- oder lösungsmittelbasierte Polyimid, PP-MAH, EAA, Polyurethan oder Acrylat oder dgl. Primer.

Die Dicke der für die erfindungsgemässen Laminate verwendeten Aluminiumfolien liegt im Bereich von 20 bis 100 µm, vorzugsweise 30 bis 70 µm. Die Aluminiumfolie kann weich sein oder eine definierte Härte aufweisen.

Die erfindungsgemässen Laminate können auf bestehenden Abpackanlagen zu Verpackungsbehältern verarbeitet werden.

Eine Lackkaschierung kann mit wässrigen, lösungsmittelbasierten oder lösungsmittelfreien Kaschiermitteln durchgeführt werden.

Eine Extrusionskaschierung ist umweltfreundlich, da sie kein Lösungsmittel benötigt und demzufolge die Atmosphäre auch nicht mit VOC's belastet.

Weitere Vorteile, Merkmale und Einzelheiten der Erfindung ergeben sich aus der nachfolgenden Beschreibung bevorzugter Ausführungsbeispiele.

In der nachstehenden Tabelle ist eine Auswahl von erfindungsgemäss aufgebauten, kaltverformbaren Laminaten mit wenigstens einer biaxial gereckten Folie aus Polyamid (oPA), Polyester oder Polypropylen (PP) auf der Aussenseite und wenigstens einer nicht gereckten Folie aus Polyvinylchlorid (PVC) als Siegelschicht auf der Innenseite zusammengestellt. Mit "Aussenseite" ist die beim Verpackungsbehälter die Aussenseite bildende, mit "Innenseite" die zur Siegelung gegen den Kunststoff einer Deckfolie gerichtete Seite des Laminates bezeichnet, jeweils unter Angabe der Foliendicke bei Folienbeschichtung.

| **Beispiel** | **Aussenseite** | **Al-Folie** | **Innenseite** |
|---|---|---|---|
| **1** | oPA, 25 µm, extrusionskaschiert mit PE-LLD-MAH, 10 µm | 45 µm | PVC, 25 µm, lackkaschiert |
| 2 | oPA, 25 µm, extrusionskaschiert mit PE-LLD-MAH,10µm | 45 µm | PVC, 25 µm, extrusionskaschiert |
| **3** | oPA, 25 µm, extrusionskaschiert mit PE-LLD-MAH, 10 µm, gegen Primer | 45 µm | PVC, 25 µm, lackkaschiert |
| **4** | oPA, 25 µm, extrusionskaschiert mit PP-MAH, 10 µm | 45 µm | PVC, 25 µm, lackkaschiert |
| 5 | oPA, 25 µm, extrusionskaschiert mit PP-MAH, 10 µm | 45 µm | PVC, 25 µm, extrusionskaschiert |
| 6 | oPA, 25 µm, extrusionskaschiert mit EVA-MAH, 10 µm, gegen Primer | 45 µm | PVC, 25 µm, lackkaschiert |
| 7 | oPA, 25 µm, extrusionskaschiert mit EVA-MAH, 10 µm | 45 µm | PVC, 25 µm, lackkaschiert |
| 8 | oPA, 25 µm, extrusionskaschiert mit EVA-MAH, 10 µm | 45 µm | PVC, 25 µm, extrusionskaschiert |
| 9 | oPA, 25 µm / Primer, extrusionskaschiert mit EAA, 10 µm | 45 µm | PVC, 20 µm, lackkaschiert |
| 10 | oPA, 25 µm / Primer, extrusionskaschiert mit EAA, 10 µm | 45µm | PVC, 25 µm, extrusionskaschiert |
| 11 | oPA, 25 µm / Primer, extrusionskaschiert mit EAA, 10 µm, gegen Primer | 45 µm | PVC, 15 µm, extrusionskaschiert |
| 12 | oPA, 25 µm / Primer, extrusionskaschiert mit EAA, 10 µm, gegen Primer | 45 µm | PVC, 15 µm, extrusionskaschiert |
| 13 | oPA, 25 µm, extrusionskaschiert mit lonomer, 10 µm | 45 µm | PVC-, PP- oder PE-Folie, lackkaschiert |
| 14 | oPA, 25 µm, extrusionskaschiert mit lonomer, 10 µm | 45 µm | PVC, 30 µm, extrusionskaschiert |
| 15 | oPA, 25 µm, extrusionskaschiert mit lonomer, 10 µm gegen Primer | 45 µm | PVC-, PP- oder PE-Folie, lackkaschiert |
| 16 | oPA, 25 µm / Primer, extrusionskaschiert mit lonomer, 10 µm | 45 µm | PVC, 15 µm, lackkaschiert |
| 17 | oPA, 25 µm / Primer, extrusionskaschiert mit lonomer, 10 µm | 45 µm | PVC, 25 µm, extrusionskaschiert |
| 18 | oPA, 25 µm / Primer, extrusionskaschiert mit Ionomer, 10 µm, gegen Primer | 45 µm | PVC-, PP- oder PE-Folie, lackkaschiert |
| 19 | oPA, 25 µm, extrusionskaschiert mit EMA, 10 µm | 45 µm | PVC, 25 µm, lackkaschiert |
| 20 | oPA, 25 µm, extrusionskaschiert mit EMA, 10 µm | 45 µm | PVC, 20 µm, extrusionskaschiert |
| 21 | oPA, 25 µm, extrusionskaschiert mit EMA, 10 µm, gegen Primer | 45 µm | PVC, 25 µm, lackkaschiert |
| 22 | oPA, 25 µm, extrusionskaschiert mit EEA, 10 µm | 45 µm | PVC, 25 µm, lackkaschiert |
| 23 | oPA, 25 µm, extrusionskaschiert mit EEA, 10 µm | 45 µm | PVC, 15 µm, extrusionskaschiert |
| 24 | oPA, 25 µm, extrusionskaschiert mit EEA, 10 µm, gegen Primer | 45 µm | PVC, 25 µm, lackkaschiert |
| 25 | oPA, 25 µm, lackkaschiert mit PVC, 60 µm, lackkaschiert mit lösungsmittelhaltigem Kaschiermittel, oPA liegt gegen AI-Folie | 45 µm | PVC, 30 µm, lackkaschiert |
| 26 | oPA, 25 µm, lackkaschiert mit PVC, 60 µm, lackkaschiert mit lösungsmittelhaltigem Kaschiermittel, oPA liegt gegen AI-Folie | 60 µm | PVC, 30 µm, lackkaschiert |
| 27 | oPA, 25 µm, lackkaschiert mit PVC, 60 µm, lackkaschiert mit lösungsmittelhaltigem Kaschiermittel gegen Primer, oPA liegt gegen Al-Folie | 45 µm | PVC, 20 µm, lackkaschiert |
| 28 | oPA, 25 µm, lackkaschiert mit PVC, 60 µm, lackkaschiert mit lösungsmittelhaltigem Kaschiermittel gegen Primer, oPA liegt gegen Al-Folie | 60 µm | PVC, 25 µm, lackkaschiert |
| 29 | oPA, 25 µm, lackkaschiert mit PVC, 25 µm, lackkaschiert mit lösungsmittelhaltigem Kaschiermittel, oPA liegt gegen Al-Folie | 45 µm | oPA, 25 µm, lackkaschiert mit PVC, 25 µm, lackkaschiert gegen Primer, oPA liegt gegen Al-Folie |
| 30 | oPA, 25 µm, lackkaschiert mit PVC, 25 µm, lackkaschiert mit lösungsmittelhaltigem Kaschiermittel, oPA liegt gegen Al-Folie | 60 µm | oPA, 25 µm, lackkaschiert mit PVC, 25 µm, lackkaschiert gegen Primer, oPA liegt gegen Al-Folie |
| 31 | oPA, 25 µm, lackkaschiert mit PVC, 25 µm, lackkaschiert mit lösungsmittelhaltigem Kaschiermittel gegen Primer, oPA liegt gegen AI-Folie | 45 µm | oPA, 25 µm, lackkaschiert mit PVC, 25 µm, lackkaschiert, oPA liegt gegen AI-Folie |
| 32 | oPA, 25 µm, lackkaschiert mit PVC, 25 µm, lackkaschiert mit lösungsmittelhaltigem Kaschiermittel, oPA liegt gegen Al-Folie | 60 µm | oPA, 25 µm, lackkaschiert mit PVC, 25 µm, lackkaschiert, oPA liegt gegen AI-Folie oPA liegt gegen Al-Folie |
| 33 | oPA, 25 µm, lackkaschiert mit PVC, 25 µm, lackkaschiert mit lösungsmittelhaltigem Kaschiermittel gegen Primer, oPA liegt gegen Al-Folie | 45 µm | oPA, 25 µm, lackkaschiert mit PVC, 25 µm, lackkaschiert, oPA liegt gegen Al-Folie |

Die nicht gereckten Folien aus Polyvinylchlorid (PVC) weisen gegenüber derzeit verwendeten PVC-Folien eine deutlich geringere Gas- und Wasserdampfdurchlässigkeit auf und gegenüber mono- oder biaxial gereckten PVC-Folien keine Delamination nach einer Verformung.

Die vorstehend erwähnten Beispiele stellen bloss eine Auswahl bevorzugter Laminate dar. Die Erfindung ist nicht auf die genannten Beispiele begrenzt.

## Patentansprüche

1. Kaltverformbares Laminat für die Herstellung von Behältern zur Verpackung von pharmazeutischen, nahrungsergänzenden und medizintechnischen Produkten und Diagnostika, mit einer Aluminiumfolie, wenigstens einer auf einer ersten Seite der Aluminiumfolie angeordneten biaxial gereckten Folie aus Polyamid (oPA), Polyester oder Polypropylen (PP) und wenigstens einer auf der zweiten Seite der Aluminiumfolie angeordneten Folie aus Polyvinylchlorid (PVC) als Siegelschicht,
**dadurch gekennzeichnet, dass**
die Folie/n aus Polyvinylchlorid (PVC) nicht gereckt ist/sind.

2. Kaltverformbares Laminat nach Anspruch 1, **dadurch gekennzeichnet, dass** die auf der ersten Seite der Aluminiumfolie angeordnete biaxial gereckte Folie aus Polyamid (oPA), Polyester oder Polypropylen (PP) mit einer nicht gereckten Folie aus Polyvinylchlorid (PVC) verbunden ist.

3. Kaltverformbares Laminat nach Anspruch 1 oder 2, **dadurch gekennzeichnet, dass** zwischen der auf der zweiten Seite der Aluminiumfolie angeordneten nicht gereckten Folie aus Polyvinylchlorid (PVC) und der Aluminiumfolie eine biaxial gereckte Folie aus Polyamid (oPA), Polyester oder Polypropylen (PP) angeordnet ist.

4. Kaltverformbares Laminat nach Anspruch 1 oder 2, **dadurch gekennzeichnet, dass** die Siegelschicht gegen die Aluminiumfolie lack- oder extrusionskaschiert ist.

5. Kaltverformbares Laminat nach Anspruch 3, **dadurch gekennzeichnet, dass** die Siegelschicht gegen die biaxial gereckte Folie aus Polyamid (oPA), Polyester oder Polypropylen (PP) lack- oder extrusionskaschiert ist.

6. Kaltverformbares Laminat nach einem der Ansprüche 1 bis 5, **dadurch gekennzeichnet, dass** die auf der ersten Seite der Aluminiumfolie angeordneten biaxial gereckten Folie aus Polyamid (oPA), Polyester oder Polypropylen (PP) gegen die Aluminiumfolie lack- oder extrusionskaschiert ist.

7. Kaltverformbares Laminat nach Anspruch 2, **dadurch gekennzeichnet, dass** die auf der ersten Seite der Aluminiumfolie angeordnete nicht gereckte Folie aus Polyvinylchlorid (PVC) gegen die biaxial gereckte Folie aus Polyamid (oPA), Polyester oder Polypropylen (PP) lack- oder extrusionskaschiert ist.

8. Kaltverformbares Laminat nach einem der Ansprüche 1 bis 7, **dadurch gekennzeichnet, dass** die Dicke der auf der zweiten Seite der Aluminiumfolie als Siegelschicht angeordneten nicht gereckten Folie aus Polyvinylchlorid (PVC) 10 bis 30 µm beträgt.

9. Kaltverformbares Laminat nach Anspruch 2, **dadurch gekennzeichnet, dass** die Dicke der auf der ersten Seite der Aluminiumfolie angeordneten nicht gereckten Folie aus Polyvinylchlorid (PVC) 10 bis 100 µm beträgt.

10. Kaltverformbares Laminat nach einem der Ansprüche 1 bis 9, **dadurch gekennzeichnet, dass** die Dicke der biaxial gereckte Folie/n aus Polyamid (oPA), Polyester oder Polypropylen (PP) 10 bis 50 µm, vorzugsweise 15 bis 30 µm beträgt.

11. Kaltverformbares Laminat nach einem der Ansprüche 1 bis 10, **dadurch gekennzeichnet, dass** die biaxial gereckte/n Folie/n aus Polyamid (oPA), Polyester oder Polypropylen (PP) und/oder die nicht gereckte/n Folie/n aus Polyvinylchlorid (PVC) mit haftungsmodifizierten Polyolefinen, insbesondere PE-MAH, PP-MAH, EVA-MAH oder Polyethylen Copolymeren, insbesondere EAA, EMA, EEA oder lonomere, gegen die Aluminiumfolie extrusionskaschiert ist/sind.

12. Kaltverformbares Laminat nach Anspruch 11, **dadurch gekennzeichnet, dass** die Aluminiumfolie mit einem Primer beschichtet ist.

13. Kaltverformbares Laminat nach Anspruch 2, **dadurch gekennzeichnet, dass** die auf der ersten Seite der Aluminiumfolie angeordnete biaxial gereckte Folie aus Polyamid (oPA), Polyester oder Polypropylen (PP) mit einer nicht gereckten Folie aus Polyolefin, vorzugsweise Polyethylen, Polypropylen oder COC, oder Polyester verbunden ist.

14. Kaltverformbares Laminat nach einem der Ansprüche 1 bis 13, **dadurch gekennzeichnet, dass** die biaxial orientierten Folien in Kombination aussen und innen verwendet werden.
